# FASCICULE DE BREVET EUROPEEN

(11) **EP 4 135 995 B1**
(45) Date de publication et mention de la délivrance du brevet: **08.05.2024**
(21) Numéro de dépôt: 21716460.7
(22) Date de dépôt: 08.04.2021
(51) Int. Cl.: B60R 13/02

(54) **PANNEAU DE GARNISSAGE INTÉRIEUR DE VÉHICULE AUTOMOBILE**
INNENVERKLEIDUNGSPANEEL FÜR KRAFTFAHRZEUG
MOTOR VEHICLE INNER TRIM PANEL

(30) Priorité: 17.04.2020 FR 2003873
(43) Date de publication de la demande: 22.02.2023
(73) Titulaire: TREVES PRODUCTS, SERVICES & INNOVATION, 75008 Paris (FR)
(72) Inventeur: HURSON, Stéphane, 75008 PARIS (FR); BRUNOIS, Arnaud, 75008 PARIS (FR)
(74) Mandataire: Sayettat, Julien Christian
(86) Numéro de dépôt international: PCT/EP2021/059221
(87) Numéro de publication internationale: WO 2021/209317

(56) Documents cités:
- EP-A2- 0 787 578
- EP-A2- 0 787 578
- FR-A1- 3 055 597
- FR-A1- 3 055 597
- US-A1- 2020 079 291
- US-A1- 2020 079 291

## Description

L'invention concerne un panneau de garnissage intérieur de véhicule automobile et un procédé de réalisation d'un tel panneau. Le document EP 0 787 578 A2 présente un exemple de panneau d'habillage intérieur de véhicule automobile.

Il est connu de réaliser un panneau de garnissage intérieur de véhicule automobile, ledit panneau comprenant :
- une âme à base de nid d'abeille en carton, ladite âme présentant une face supérieure et une face inférieure se reliant entre elles par une tranche,
- deux couches supérieure et inférieure de renfort de ladite âme, lesdites couches étant à base de fibres de renfort noyées dans de la mousse de polyuréthanne, lesdites couches s'étendant respectivement sur lesdites faces supérieure et inférieure, ladite mousse surmoulant ladite âme de manière à associer lesdites couches auxdites faces,
- un élément fonctionnel - par exemple sous forme de joint d'étanchéité - fixé sur ladite tranche par au moins un moyen de fixation, ledit moyen comprenant une partie de maintien dudit élément et une partie d'ancrage dans ladite âme en forme générale de tige.

Un tel agencement permet de réaliser un panneau de bonne rigidité apportée par un « effet de poutre » réalisé par les couches de renfort associées l'une à l'autre par l'intermédiaire de l'âme formant moyen d'écartement.

Le moyen de fixation est quant à lui enfoncé en force dans l'âme en la perforant. Cependant, on observe qu'une telle façon de fixer l'élément fonctionnel peut conduire à une fixation insuffisamment robuste.

L'invention a pour but de proposer un agencement permettant de pallier cet inconvénient.

A cet effet, et selon un premier aspect, l'invention propose un panneau de garnissage intérieur de véhicule automobile, ledit panneau comprenant :
- une âme à base de nid d'abeille en carton, ladite âme présentant une face supérieure et une face inférieure se reliant entre elles par une tranche,
- deux couches supérieure et inférieure de renfort de ladite âme, lesdites couches étant à base de fibres de renfort noyées dans de la mousse de polyuréthanne, lesdites couches s'étendant respectivement sur lesdites faces supérieure et inférieure, ladite mousse surmoulant ladite âme de manière à associer lesdites couches auxdites faces,
- un élément fonctionnel fixé sur ladite tranche par au moins un moyen de fixation, ledit moyen comprenant une partie de maintien dudit élément et une partie d'ancrage dans ladite âme en forme générale de tige,
ledit panneau présentant en outre les caractéristiques suivantes :
- ladite âme est pourvue d'un trou débouchant sur ladite face inférieure,
- ledit trou est disposé de sorte que ladite partie d'ancrage le traverse,
- la paroi interne dudit trou est recouverte d'une couche de mousse issue de ladite couche inférieure de sorte que ladite couche de mousse forme une paroi de renfort de l'ancrage de ladite partie d'ancrage.

Avec l'agencement proposé, on améliore de façon importante, grâce à la paroi de renfort, la robustesse de la fixation de l'élément fonctionnel.

Selon un deuxième aspect, l'invention propose un procédé de réalisation d'un tel panneau.

D'autres particularités et avantages de l'invention apparaîtront dans la description qui suit, faite en référence aux figures jointes, dans lesquelles :

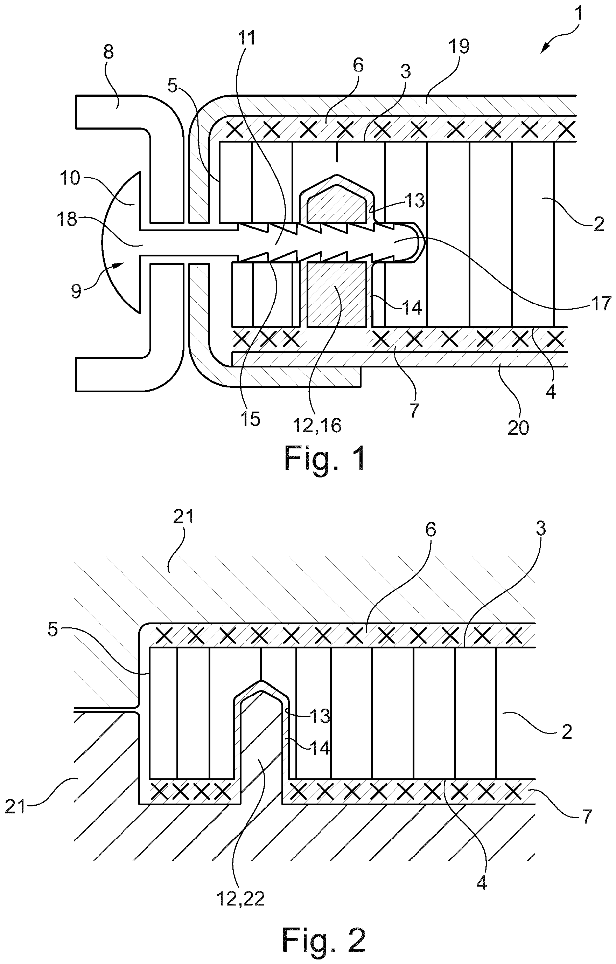

[Fig.1] est une vue schématique en coupe partielle d'un panneau selon une réalisation,
[Fig.2] est une vue schématique en coupe partielle du panneau de la figure 1 en cours de fabrication dans un moule.

En référence aux figures, on décrit un panneau 1 de garnissage intérieur de véhicule automobile, ledit panneau comprenant :
- une âme 2 à base de nid d'abeille en carton, ladite âme présentant une face supérieure 3 et une face inférieure 4 se reliant entre elles par une tranche 5,
- deux couches supérieure 6 et inférieure 7 de renfort de ladite âme, lesdites couches étant à base de fibres de renfort - notamment de verre - noyées dans de la mousse de polyuréthanne, lesdites couches s'étendant respectivement sur lesdites faces supérieure et inférieure, ladite mousse surmoulant ladite âme de manière à associer lesdites couches auxdites faces,
- un élément fonctionnel 8 - par exemple sous forme de joint d'étanchéité - fixé sur ladite tranche par au moins un moyen de fixation 9, ledit moyen comprenant une partie de maintien 10 dudit élément et une partie d'ancrage 11 dans ladite âme en forme générale de tige,
ledit panneau présentant en outre les caractéristiques suivantes :
- ladite âme est pourvue d'un trou 12 débouchant sur ladite face inférieure,
- ledit trou est disposé de sorte que ladite partie d'ancrage le traverse,
- la paroi interne 13 dudit trou est recouverte d'une couche de mousse issue de ladite couche inférieure de sorte que ladite couche de mousse forme une paroi de renfort 14 de l'ancrage de ladite partie d'ancrage.

Selon la réalisation représentée, la partie d'ancrage 11 traverse le trou 12 de part en part de manière à traverser deux fois la paroi de renfort 14 pour renforcer l'ancrage.

Selon la réalisation représentée, la partie d'ancrage 11 est pourvue d'excroissances 15 de harponnage radiales.

Selon la réalisation représentée, le panneau 1 comprend en outre un insert 16 de renfort, ledit insert étant logé dans le trou 12 et étant pourvu d'un orifice 17 de réception de la partie d'ancrage.

Selon une variante de réalisation non représentée, la partie d'ancrage 11 se présente sous la forme d'une vis filetée coopérant avec un filetage réciproque réalisé dans l'orifice 17 de l'insert 16.

Selon la réalisation représentée, la partie de maintien 10 est en forme de collerette prenant appui en périphérie d'un orifice 18 réalisé dans l'élément fonctionnel 8.

Selon la réalisation représentée, le panneau 1 comprend en outre une couche supérieure de revêtement 19 de la couche supérieure de renfort 6, ladite couche de revêtement s'étendant sur la tranche 5 de l'âme 2.

Selon divers modes de réalisation, la couche supérieure de revêtement 19 est collée ou bien surmoulée par la mousse de la couche supérieure de renfort 6.

Selon la réalisation représentée, la couche inférieure de renfort 7 est revêtue d'une couche de revêtement inférieure 20, ladite couche de revêtement s'étendant en regard du trou 12 pour le masquer.

Selon divers modes de réalisation, la couche inférieure de revêtement 20 est collée ou bien surmoulée par la mousse de la couche inférieure de renfort 7.

On décrit à présent un procédé de fabrication d'un tel panneau 1, ledit procédé comprenant les étapes suivantes :
- prévoir une âme 2 à base de nid d'abeille en carton, ladite âme présentant une face supérieure 3 et une face inférieure 4 se reliant par une tranche 5,
- prévoir un moule 21 pourvu d'au moins un picot 22 saillant de sa paroi interne,
- disposer deux nappes respectives à base de fibres de renfort sur chacune desdites faces,
- déverser sur chacune desdites nappes un mélange précurseur de mousse de polyuréthanne,
- disposer l'ensemble dans ledit moule et le fermer de manière à réaliser au moyen dudit picot au moins un trou 12 dans ladite âme,
- attendre l'expansion de la mousse de manière à former des couches supérieure 6 et inférieure 7 de renfort, ladite mousse surmoulant ladite âme et la paroi interne 13 dudit trou par insertion entre ladite paroi interne et ledit picot, de manière à associer lesdites couches auxdites faces et à réaliser une paroi de renfort 14 avec la mousse recouvrant ladite paroi interne,
- retirer l'ensemble dudit moule,
- fixer sur ladite tranche un élément fonctionnel 8 par au moins un moyen de fixation 9 enfoncé en force dans ladite âme pour la perforer, ledit moyen comprenant une partie de maintien 10 dudit élément et une partie d'ancrage 11 dans ladite âme en forme générale de tige.

On peut prévoir en outre d'associer au moins une couche supérieure de revêtement 19 et/ou ou inférieure 20, sur au moins une couche de renfort 6,7, notamment par collage ou par surmoulage dans le moule 21.

Selon une réalisation, le procédé prévoit en outre, avant la fixation de l'élément 8, la mise en place d'un insert de renfort 16 dans le trou 12, ledit insert étant pourvu d'un orifice 17 de réception de la partie d'ancrage 11.

## Revendications

1. Panneau (1) de garnissage intérieur de véhicule automobile, ledit panneau comprenant :
• une âme (2) à base de nid d'abeille en carton, ladite âme présentant une face supérieure (3) et une face inférieure (4) se reliant entre elles par une tranche (5),
• deux couches supérieure (6) et inférieure (7) de renfort de ladite âme, lesdites couches étant à base de fibres de renfort noyées dans de la mousse de polyuréthanne, lesdites couches s'étendant respectivement sur lesdites faces supérieure et inférieure, ladite mousse surmoulant ladite âme de manière à associer lesdites couches auxdites faces,
• un élément fonctionnel (8) fixé sur ladite tranche par au moins un moyen de fixation (9), ledit moyen comprenant une partie de maintien (10) dudit élément et une partie d'ancrage (11) dans ladite âme en forme générale de tige,
ledit panneau étant **caractérisé en ce que** :
• ladite âme est pourvue d'un trou (12) débouchant sur ladite face inférieure,
• ledit trou est disposé de sorte que ladite partie d'ancrage le traverse,
• la paroi interne (13) dudit trou est recouverte d'une couche de mousse issue de ladite couche inférieure de sorte que ladite couche de mousse forme une paroi de renfort (14) de l'ancrage de ladite partie d'ancrage.

2. Panneau selon la revendication 1, **caractérisé en ce que** la partie d'ancrage (11) traverse le trou (12) de part en part de manière à traverser deux fois la paroi de renfort (14) pour renforcer l'ancrage.

3. Panneau selon l'une des revendications précédentes, **caractérisé en ce que** la partie d'ancrage (11) est pourvue d'excroissances (15) de harponnage radiales.

4. Panneau selon l'une quelconque des revendications précédentes, **caractérisé en ce qu'**il comprend en outre un insert de renfort (16), ledit insert étant logé dans le trou (12) et étant pourvu d'un orifice (17) de réception de la partie d'ancrage (11).

5. Panneau selon la revendication précédente, **caractérisé en ce que** la partie d'ancrage (11) se présente sous la forme d'une vis filetée coopérant avec un filetage réciproque réalisé dans l'orifice (17) de l'insert (16).

6. Panneau selon l'une quelconque des revendications précédentes, **caractérisé en ce que** la partie de maintien (10) est en forme de collerette prenant appui en périphérie d'un orifice (18) réalisé dans l'élément fonctionnel (8).

7. Panneau selon l'une quelconque des revendications précédentes, **caractérisé en ce qu'**il comprend en outre une couche supérieure de revêtement (19) de la couche supérieure de renfort (6), ladite couche de revêtement s'étendant sur la tranche (5) de l'âme (2).

8. Panneau selon l'une quelconque des revendications précédentes, **caractérisé en ce que** la couche inférieure de renfort (7) est revêtue d'une couche de revêtement inférieure (20), ladite couche de revêtement s'étendant en regard du trou (12) pour le masquer.

9. Procédé de fabrication d'un panneau (1) selon l'une quelconque des revendications précédentes, **caractérisé en ce qu'**il comprend les étapes suivantes :
• prévoir une âme (2) à base de nid d'abeille en carton, ladite âme présentant une face supérieure (3) et une face inférieure (4) se reliant par une tranche (5),
• prévoir un moule (21) pourvu d'au moins un picot (22) saillant de sa paroi interne,
• disposer deux nappes respectives à base de fibres de renfort sur chacune desdites faces,
• déverser sur chacune desdites nappes un mélange précurseur de mousse de polyuréthanne,
• disposer l'ensemble dans ledit moule et le fermer de manière à réaliser au moyen dudit picot au moins un trou (12) dans ladite âme,
• attendre l'expansion de la mousse de manière à former des couches supérieure (6) et inférieure (7) de renfort, ladite mousse surmoulant ladite âme et la paroi interne (13) dudit trou par insertion entre ladite paroi interne et ledit picot, de manière à associer lesdites couches auxdites faces et à réaliser une paroi de renfort (14) avec la mousse recouvrant ladite paroi interne,
• retirer l'ensemble dudit moule,
• fixer sur ladite tranche un élément fonctionnel (8) par au moins un moyen de fixation (9) enfoncé en force dans ladite âme pour la perforer, ledit moyen comprenant une partie de maintien (10) dudit élément et une partie d'ancrage (11) dans ladite âme en forme générale de tige.

10. Procédé selon la revendication précédente, quand elle se rattache à la revendication 4, ledit procédé prévoyant en outre, avant la fixation de l'élément (8), la mise en place d'un insert de renfort (16) dans le trou (12), ledit insert étant pourvu d'un orifice (17) de réception de la partie d'ancrage (11).

## Patentansprüche

1. Innenverkleidungspaneel (1) für Kraftfahrzeuge, wobei das Paneel umfasst:
- einen Kern (2) auf Basis von Kartonwaben, wobei der Kern eine obere Seite (3) und eine untere Seite (4) aufweist, die durch einen Teilabschnitt (5) miteinander verbunden sind,
- zwei Schichten, eine obere (6) und eine untere (7), zur Verstärkung des Kerns, wobei die Schichten auf Verstärkungsfasern basieren, die in Polyurethanschaum eingebettet sind, wobei sich die Schichten jeweils über der oberen und der unteren Seite erstrecken, wobei der Schaum den Kern überformt, um die Schichten mit den Seiten zu vereinen,
- ein funktionelles Element (8), das über mindestens ein Befestigungsmittel (9) an dem Teilabschnitt befestigt ist, wobei das Mittel einen Teil zum Halten (10) des Elements und einen Teil zum Verankern (11) in dem Kern umfasst, der allgemein in Schaftform vorliegt,
wobei das Paneel **dadurch gekennzeichnet ist, dass**:
- der Kern mit einem Loch (12) versehen ist, das an der unteren Seite mündet,
- das Loch so angeordnet ist, dass der Verankerungsteil es durchquert,
- die Innenwand (13) des Lochs mit einer Schaumschicht, die aus der unteren Schicht stammt, so bedeckt ist, dass die Schaumschicht eine Verstärkungswand (14) der Verankerung des Verankerungsteils bildet.

2. Paneel nach Anspruch 1, **dadurch gekennzeichnet, dass** der Verankerungsteil (11) das Loch (12) von Seite zu Seite durchquert, um zur Verstärkung der Verankerung die Verstärkungswand (14) zweimal zu durchqueren.

3. Paneel nach einem der vorstehenden Ansprüche, **dadurch gekennzeichnet, dass** der Verankerungsteil (11) mit radialen Harpunenansätzen (15) versehen ist.

4. Paneel nach einem der vorstehenden Ansprüche, **dadurch gekennzeichnet, dass** es weiter einen Verstärkungseinsatz (16) umfasst, wobei der Einsatz in dem Loch (12) untergebracht ist und mit einer Öffnung (17) zum Aufnehmen des Verankerungsteils (11) versehen ist.

5. Paneel nach dem vorstehenden Anspruch, **dadurch gekennzeichnet, dass** der Verankerungsteil (11) die Form einer Gewindeschraube aufweist, die mit einem Gegengewinde zusammenwirkt, das in der Öffnung (17) des Einsatzes (16) ausgestaltet ist.

6. Paneel nach einem der vorstehenden Ansprüche, **dadurch gekennzeichnet, dass** der Halteteil (10) in Form eines Kragens vorliegt, der am Umfang einer Öffnung (18), die in dem funktionellen Element (8) ausgestaltet ist, in Auflage geht.

7. Paneel nach einem der vorstehenden Ansprüche, **dadurch gekennzeichnet, dass** es weiter eine obere Schicht zur Abdeckung (19) der oberen Verstärkungsschicht (6) umfasst, wobei sich die Deckschicht über dem Teilabschnitt (5) des Kerns (2) erstreckt.

8. Paneel nach einem der vorstehenden Ansprüche, **dadurch gekennzeichnet, dass** die untere Verstärkungsschicht (7) mit einer unteren Deckschicht (20) bedeckt ist, wobei sich die Deckschicht dem Loch (12) zugewandt erstreckt, um dieses zu verbergen.

9. Verfahren zur Herstellung eines Paneels (1) nach einem der vorstehenden Ansprüche, **dadurch gekennzeichnet, dass** es die folgenden Schritte umfasst:
- Bereitstellen eines Kerns (2) auf Basis von Kartonwaben, wobei der Kern eine obere Seite (3) und eine untere Seite (4) aufweist, die durch einen Teilabschnitt (5) miteinander verbunden sind,
- Bereitstellen einer Form (21), die mit mindestens einem Dorn (22) versehen ist, der von ihrer Innenwand vorspringt,
- Anordnen von zwei jeweiligen Lagen auf Basis von Verstärkungsfasern auf jeder der Seiten,
- Gießen einer Polyurethanschaum-Vorläufermischung auf jede der Lagen,
- Anordnen der Baugruppe in der Form und schließen derselben, um mittels des Dorns mindestens ein Loch (12) im Kern auszugestalten,
- Abwarten der Expansion des Schaums, um eine obere (6) und eine untere (7) Verstärkungsschicht zu bilden, wobei der Schaum den Kern und die Innenwand (13) des Lochs durch Eindringen zwischen der Innenwand und dem Dorn überformt, um die Schichten mit den Seiten zu vereinen und eine Verstärkungswand (14) auszugestalten, wobei der Schaum die Innenwand bedeckt,
- Herausnehmen der Baugruppe aus der Form,
- Befestigen eines funktionellen Elements (8) am Teilabschnitt über mindestens ein Befestigungsmittel (9), das mit Kraft in den Kern eingedrückt wird, um diesen zu perforieren, wobei das Mittel einen Teil zum Halten (10) des Elements und einen Teil zum Verankern (11) in dem Kern umfasst, der allgemein in Schaftform vorliegt.

10. Verfahren nach dem vorstehenden Anspruch, wenn es an Anspruch 4 anknüpft, wobei das Verfahren vor dem Befestigen des Elements (8) weiter das Einlegen eines Verstärkungseinsatzes (16) in das Loch (12) vorsieht, wobei der Einsatz mit einer Öffnung (17) zum Aufnehmen des Verankerungsteils (11) versehen ist.

## Claims

1. Motor vehicle inner trim panel (1), said panel including :
• a cardboard honeycomb core (2), said core having an upper face (3) and a lower face (4) joined together by an edge (5),
• two upper (6) and lower (7) reinforcement layers for said core, said layers being based on reinforcing fibers embedded in polyurethane foam, said layers extending respectively over said top and bottom faces, said foam overmolding said core so as to associate said layers with said faces,
• a functional element (8) attached to said wafer by at least one fastening means (9), said means comprising a holding portion (10) for said element and an anchoring portion (11) in said generally rod- shaped core,
said panel being **characterized in that** :
• said core is provided with a hole (12) opening onto said bottom face,
• said hole is arranged so that said anchoring part passes through it,
• the inner wall (13) of said hole is covered with a layer of foam from said lower layer, so that said layer of foam forms a reinforcing wall (14) for the anchoring of said anchoring part.

2. Panel according to claim 1, **characterized in that** the anchoring part (11) passes through the hole (12) from side to side so as to pass twice through the reinforcing wall (14) to reinforce the anchorage.

3. Panel according to one of the preceding claims, **characterized in that** the anchoring part (11) is provided with radial harpoon protrusions (15).

4. Panel according to any of the preceding claims, **characterized in that** it further comprises a reinforcing insert (16), said insert being housed in the hole (12) and being provided with an orifice (17) for receiving the anchoring part (11).

5. Panel according to the preceding claim, **characterized in that** the anchoring part (11) is in the form of a threaded screw cooperating with a reciprocal thread made in the orifice (17) of the insert (16).

6. Panel according to any one of the preceding claims, **characterized in that** the retaining part (10) is in the form of a flange bearing on the periphery of a hole (18) made in the functional element (8).

7. Panel according to any one of the preceding claims, **characterized in that** it further comprises an upper coating layer (19) of the upper reinforcement layer (6), said coating layer extending over the edge (5) of the core (2).

8. Panel according to any of the preceding claims, **characterized in that** the lower reinforcement layer (7) is coated with a lower coating layer (20), said coating layer extending opposite the hole (12) to mask it.

9. Process for manufacturing a panel (1) according to any of the preceding claims, **characterized in that** it comprises the steps below:
• provide a cardboard honeycomb core (2), said core having an upper face (3) and a lower face (4) joined by an edge (5),
• provide a mold (21) with at least one spike (22) protruding from its inner wall,
• place two respective reinforcing fiber-based mats on each of said faces,
• outpouring a polyurethane foam precursor mixture onto each of said webs,
• place the assembly in said mold and close it so as to make at least one hole (12) in said core by means of said pin,
• wait for the foam to expand so as to form upper (6) and lower (7) reinforcing layers, said foam overmoulding said core and the inner wall (13) of said hole by insertion between said inner wall and said spike, so as to associate said layers with said faces and make a reinforcing wall (14) with the foam covering said wall in-house,
• remove the assembly from the mold,
• fastening a functional element (8) to said wafer by at least one fastening means (9) pressed into said core to perforate it, said means comprising a holding portion (10) for said element and a fastening portion (11) in said generally rodshaped core.

10. Method according to the preceding claim, when it relates to claim 4, said method further providing, prior to fixing the element (8), the placing of a reinforcing insert (16) in the hole (12), said insert being provided with a hole (17) for receiving the anchoring part (11).
